Europäisches Patentamt

European Patent Office

Office européen des brevets

(19)

(11) Veröffentlichungsnummer: **0 213 382**
**B1**

(12) **EUROPÄISCHE PATENTSCHRIFT**

(45) Veröffentlichungstag der Patentschrift:
24.01.90

(51) Int. Cl.⁴: **H04M 3/36,** H04Q 11/04,
H04Q 3/545

(21) Anmeldenummer: 86110302.6

(22) Anmeldetag: 25.07.86

(54) Schaltungsanordnung für Fernmeldevermittlungsanlagen, insbesondere Fernsprechvermittlungsanlagen, mit informationsverarbeitenden Schaltwerken und Verkehrsmesseinrichtungen.

(30) Priorität: 14.08.85 DE 3529171

(43) Veröffentlichungstag der Anmeldung:
11.03.87 Patentblatt 87/11

(45) Bekanntmachung des Hinweises auf die Patenterteilung:
24.01.90 Patentblatt 90/4

(84) Benannte Vertragsstaaten:
AT BE CH DE FR GB IT LI NL SE

(56) Entgegenhaltungen:
EP-A- 0 104 637
EP-A- 0 121 239
EP-A- 0 166 101
US-A- 3 517 123
US-A- 4 497 979

PATENTS ABSTRACTS OF JAPAN, Band 5,
Nr. 163 (E-78)[835], 20. Oktober 1981; & JP - A - 56 90 692
FALL JOINT COMPUTER CONFERENCE, AFIPS, San
Francisco, US, 7.-10. November 1966, Band 29,
Seiten 23-35, Spartan Books, Seiten 23-35, Washington,
DC, US; E.S HOOVER et al.: "Performance of a monitor
for a real-time control system"
IBM TECHNICAL DISCLOSURE BULLETIN, Band 25,
Nr. 1, Juni 1982, Seiten 431,432, New York, US; J.R.
BAKER et al.: "Priority polling algorithm"

(73) Patentinhaber: Siemens Aktiengesellschaft,
Wittelsbacherplatz 2, D-8000 München 2(DE)

(72) Erfinder: Jans, Herbert, Dr.-Ing., Ammerseestrasse 34,
D-8027 Neuried(DE)
Erfinder: Brandmaier, Klaus, Hohenbrunner Weg 120,
D-8021 Taufkirchen(DE)
Erfinder: Pohl, Siegfried, Dr.rer.nat., Hirschplanallee 7,
D-8042 Oberschleissheim(DE)

## Beschreibung

Durch die deutsche Offenlegungsschrift 34 16 592 (VPA 84 P 1351) ist bereits eine Zähleinrichtung bekannt, die zur Erfassung von an ein Verarbeitungsschaltwerk gerichteten Verarbeitungsanforderungen dient und die nach Maßgabe eines von einer Verkehrsmeßeinrichtung an sie übertragenen Prozentsatzes eine Abweisung eines dementsprechenden Teiles dieser Verarbeitungsanforderungen bewirkt. In einer Anordnung dieser bekannten Art führt also ein in der Zähleinrichtung einstellbarer Abweisungsprozentsatz dazu, daß alle Verarbeitungsanforderungen gleich behandelt werden, daß nach Maßgabe dieses Abweisungsprozentsatzes einige der eintreffenden Verarbeitungsanforderungen angenommen werden, andere dagegen abgewiesen werden. Verarbeitungsanforderungen werden durch ein Eintreffen von zu verarbeitenden Informationen in verbindungsindividuellen Schalteinrichtungen verursacht. Dies können Wahlinformationen sowie andere zur Verbindungsherstellung und -aufrechterhaltung dienende Schaltkennzeichen sein. Verarbeitungsanforderungen werden auch durch Neubelegungen von Teilnehmerleitungen und Verbindungsleitungen verursacht. Sie werden von verbindungsindividuellen Schalteinrichtungen an informationsverarbeitende zentrale oder teilzentrale Schaltwerke abgegeben.

Die deutsche Offenlegungsschrift 34 16 074 (VPA 84 P 1339) beschreibt demgegenüber eine Unterscheidung von Verarbeitungsanforderungen in mehrere Dringlichkeitsklassen. Hierin ist eine Belegungs-Abweiseinrichtung beschrieben, die nach ihr vorgegebenen Werten (Prozentsätzen) Belegungen (Neubelegungen) quantitativ teils als anzunehmend und teils als abzuweisend markiert. Darüber hinaus ist eine Dringlichkeits-Bewertungs-Zusatzeinrichtung vorgesehen, die in Abhängigkeit von Dringlichkeitsdaten, die einer jeden Belegung beigegeben sind, bereits als abzuweisend markierte Belegungen höherer Dringlichkeit noch als anzunehmend und ebenso andere, bereits als anzunehmend markierte Belegungen niedrigerer Dringlichkeit umgekehrt als abzuweisend ummarkiert, wobei die Summen der Belegungen (anzunehmende bzw. abzuweisende Belegungen) unverändert bleiben.

Während also im bekannten ersten Fall Verarbeitungsanforderungen summarisch erfaßt werden und einfach quantitativ ein Teil von ihnen als anzunehmend und ein Teil von ihnen als abzuweisend markiert werden, ist im bekannten letzteren Falle eine Unterscheidung der Belegungen und der in ihnen liegenden Verarbeitungsanforderungen nach Maßgabe von Dringlichkeitswerten in dem Sinne vorgesehen, daß die Belegungen bzw. Verarbeitungsanforderungen je nach ihrem jeweiligem Dringlichkeitsgrad abgewiesen werden oder nicht. Praktisch bedeutet dies, daß die Belegungen bzw. Verarbeitungsanforderungen eines untersten Dringlichkeitsgrades, also mit einem niedrigsten Dringlichkeitswert, zuerst von den Abweisungsmaßnahmen betroffen werden, daß bei einem entsprechend höheren Abweisungsprozentsatz auch die Belegungen bzw. Verarbeitungsanforderungen eines zweiten Dringlichkeitsgrades, also mit einem zweitniedrigsten Dringlichkeitswert, unter die Abweisungsmaßnahmen fallen, daß bei noch weiter ansteigendem Abweisungsprozentsatz auch die Belegungen bzw. Verarbeitungsanforderungen mit einem noch höheren Dringlichkeitswert von den Abweisungsmaßnahmen betroffen werden usw. bis schließlich die Abweisungsmaßnahmen auch die Belegungen bzw. Verarbeitungsanforderungen eines höchsten Dringlichkeitsgrades, die also mit einem obersten Dringlichkeitswert jeweils markiert sind, von den Abweisungsmaßnahmen erreicht werden. Betreffen die verschiedenen Dringlichkeitswerte von Verarbeitungsanforderungen also erstens Neubelegungen von Teilnehmern, zweitens über Verbindungsleitungen ankommende Belegungen und drittens über Verbindungsleitungen abgehende Belegungen, so ist es zweckmäßig, die Verarbeitungsanforderungen für über Verbindungsleitungen abgehende Belegungen gegenüber solchen für über Verbindungsleitungen ankommenden Belegungen zu bevorzugen und wiederum alle diese Verarbeitungsanforderungen gegenüber solchen zu bevorzugen, die aus Neubelegungen von Teilnehmern resultieren. Diese Zusammenhänge und Prinzipien werden in der deutschen Offenlegungsschrift 33 11 900 (VPA 83 P 1249) behandelt.

Die Erfindung betrifft eine Schaltungsanordnung für Fernmeldevermittlungsanlagen, insbesondere Fernsprechvermittlungsanlagen, mit zentralen und/oder teilzentralen informationsverarbeitenden Schaltwerken mit einer hinsichtlich der Informations-Verarbeitungskapazität begrenzten Leistungsfähigkeit, und mit Verkehrsmeßeinrichtungen zur Ermittlung der Informationsverarbeitungs-Verkehrsbelastung jeweils eines Schaltwerkes und zur Erkennung von durch Verarbeitungsanforderungen verursachten Informationsverarbeitungs-Verkehrsüberlastungen und mit einer Abwehr solcher Überlastungen dienenden Anforderungsabweiseinrichtungen, in denen nach Maßgabe der jeweils ermittelten Informationsverarbeitungs-Verkehrsbelastung ein kritischer Grenzwert einregelbar ist, und in denen unterschiedlichen Dringlichkeitsgraden verschiedener Arten von Verarbeitungsanforderungen entsprechend diesen analog unterschiedliche Dringlichkeitswerte individuell zugeordnet sind, und die durch jeweils einen Vergleich des Dringlichkeitswertes einer jeden Verarbeitungsanforderung mit dem kritischen Grenzwert jener jeweils ein Annahmekennzeichen - bzw. Abweisungskennzeichen - zuteilt, wenn der Dringlichkeitswert größer - bzw. kleiner - als der kritische Grenzwert ist, und durch die eine jede der Verarbeitungsanforderungen für eingetroffene Informationen gemäß dem betreffenden zugeteilten Kennzeichen dem Schaltwerk zur Verarbeitung zugeführt wird - bzw. nicht zugeführt wird -, wodurch überdurchschnittlich dringliche Verarbeitungsanforderungen mit einem gewissen Vorrang gegenüber unterdurchschnittlich dringlichen Verarbeitungsanforderungen hinsichtlich ihrer Verarbeitung in dem Schaltwerk berücksichtigt werden.

Der kritische Grenzwert ist also eine regulierbare Vergleichsbasis. Er dient als Maßstab dafür, bei Eintreffen einer jeden Verarbeitungsanforderung über Annahme oder Abweisung derselben in der angegebenen Weise entscheiden zu können. Deshalb wird der einer jeden Verarbeitungsanforderung beigefügte Dringlichkeitswert mit diesem Grenzwert verglichen. Letzterer ist aus Ergebnissen von laufend durchgeführten, das Schaltwerk betreffenden Messungen seiner Informationsverarbeitungs-Verkehrsbelastung gebildet. Seine Höhe entspricht einem Prozentsatz von durch die jeweils momentane Betriebssituation bedingt abzuweisenden Verarbeitungsanforderungen. Je höher er ansteigt, desto höher ist also dieser Prozentsatz. In bekannter Weise werden die Verarbeitungsanforderungen nicht gleichmäßig sondern nach der jeweiligen Höhe jedes ihrer individuellen Dringlichkeitswerte, die also jeweils mit dem momentanen Grenzwert verglichen werden, angenommen oder abgewiesen.

Eine Schaltungsanordnung dieser Art ist der deutschen Offenlegungsschrift 3 416 074 zu entnehmen. Diese Schaltungsanordnung ermöglicht es also, bei einer Abweisungsmaßnahmen erforderlich machenden stärkeren Verkehrsbelastung des zentralen Schaltwerkes durch Verarbeitungsanforderungen diese nach jeweiligem Dringlichkeitsgrad zu behandeln, das heißt einige von ihnen noch anzunehmen, die übrigen aber abzuweisen. Den Dringlichkeitsgraden der verbindungsindividuellen Schalteinrichtungen sind Dringlichkeitswerte zugeordnet, die jeweils der bei einer Belegung einer verbindungsindividuellen Schalteinrichtung von dieser an das betreffende informationsverarbeitende Schaltwerk abgegebenen Verarbeitungsanforderung beigegeben werden. Je nach dem kritischen Grenzwert, der in der Anforderungsabweicheinrichtung eingeregelt ist, wird nach Maßgabe dieses Grenzwertes durch jeweils einen Vergleich des betreffenden Dringlichkeitswertes mit dem Grenzwert die betreffende Verarbeitungsanforderung in Abhängigkeit davon noch angenommen oder abgewiesen, ob diese betreffende Verarbeitungsanforderung von dieser oder jener Art (s.o.) ist.

Die verbindungsindividuellen Schalteinrichtungen können Teilnehmeranschlußschaltungen und Verbindungssätze sein. Letztere können gegenüber den Teilnehmeranschlußschaltungen priorisiert sein. Das würde bedeuten, daß bei einem bestimmten Grad der Verkehrsbelastung Verarbeitungsanforderungen, die von Verbindungssätzen kommen, noch angenommen werden, dagegen aber keine Verarbeitungsanforderungen, die von Teilnehmeranschlußschaltungen her kommen. Die verbindungsindividuellen Schalteinrichtungen können sich darüberhinaus auch in mehr als zwei Arten unterscheiden und ebenso können die ihnen zugeordneten Dringlichkeitsgrade entsprechend der beschriebenen Weise mehrfach gestuft sein.

Für die Erfindung besteht nun die Aufgabe, bei erhöhter Verkehrsbelastung und entsprechend erforderlichen intensiveren Abweisungsmaßnahmen für die davon betroffenen Verarbeitungsanforderungen der verschiedenen Arten eine gewisse Möglichkeit zur Verbindungsherstellung zu gewährleisten. Eine solche Möglichkeit soll gleichmäßig für alle von den Abweisungsmaßnahmen betroffenen Teilnehmern bestehen. Die getroffenen Einschränkungen sollen sich so auswirken, daß bei besonders hohem Einschränkungsgrad für die durch einen verbleibenden Notbetrieb verursachten Verarbeitungsanforderungen der verschiedenen Arten möglichst ausgewogene Verhältnisse gegeben sind. Auch soll vermieden werden, daß das Belastungsverhalten durch ungeeignete Abweisungsmaßnahmen zu Schwingungsvorgängen führt.

Die Erfindung löst die gestellte Aufgabe dadurch, daß die o.g. Schaltungsanordnung Mittel aufweist, die bewirken, daß nach Maßgabe eines in einer Anforderungsabweiseinrichtung für jede der verschiedenen Arten von Verarbeitungsanforderungen gespeicherten konstanten artindividuellen Restakzeptanzwertes bei Überschreiten des kritischen Grenzwertes über den Dringlichkeitswert der jeweiligen Verarbeitungsanforderung der betreffenden Art in zyklischer Folge einer jeweils einem Zyklus entsprechenden Anzahl von mehreren artgleichen Verarbeitungsanforderungen mit Ausnahme von jeweils einer derselben je ein Abweisungskennzeichen und dieser einen Verarbeitungsanforderung ein Annahmekennzeichen zugeteilt wird.

Dadurch, daß für Verarbeitungsanforderungen aller Arten ein Restakzeptanzwert zum Tragen kommt, wird verhindert, daß Neubelegungen vorerst gänzlich abgewiesen werden, daß dadurch die Belastung dann so stark absinkt, daß zunächst alle Abweisungsmaßnahmen aufgehoben werden, daß es dann erneut zur Überlastung kommt und so weiter, also zu einem die Belastung betreffenden Schwingungsvorgang. Ferner wird durch die erfindungsgemäßen Maßnahmen den Teilnehmern eine gewisse Notruf-Verbindungsmöglichkeit gewährleistet.

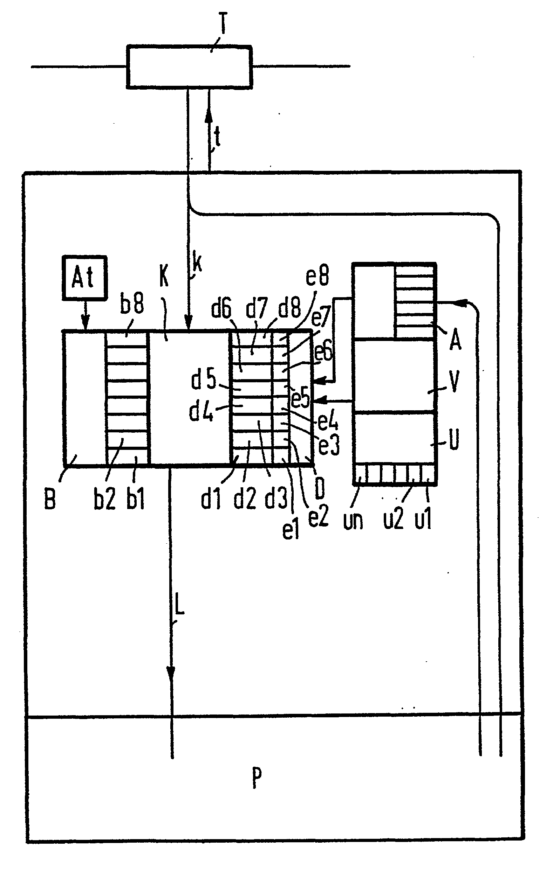

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Das Ausführungsbeispiel zeigt auszugsweise eine Schaltungsanordnung der Fernsprechvermittlungstechnik, die in ihren vielfältigen Realisierungsmöglichkeiten als bekannt vorausgesetzt wird. Im vorliegenden Falle möge es sich um eine Fernsprechvermittlungsanlage handeln, bei der die gesamten Steuerungsvorgänge, zum Beispiel Verbindungsherstellungsvorgänge, zentral oder teilzentral gesteuert werden. Deren Abwicklung möge ein zentrales oder teilzentrales informationsverarbeitendes Schaltwerk P dienen. Naturgemäß hat es eine hinsichtlich der Informations-Verarbeitungskapazität begrenzte Leistungsfähigkeit.

Im oberen Teil der Zeichnung ist eine verbindungsindividuelle Schalteinrichtung T dargestellt. Tatsächlich sind verbindungsindividuelle Schalteinrichtungen in großer Anzahl vorhanden. Bei diesen verbindungsindividuellen Schalteinrichtungen kann es sich um Teilnehmeranschlußschaltungen, Wahlempfangssätze, Verbindungssätze, Leitungsabschlußschaltungen von Orts- und Fernverbindungsleitungen und dergleichen handeln. Im Falle der Ausbildung der Fernsprechvermittlungsanlage in PCM-Technik möge es sich bei den genannten verbindungsindividuellen Schalteinrichtungen T um Ports in den Anschlußgruppen handeln. Detaillierte Zusammenhänge hierüber sind in der Beschreibung des Digitalvermittlungssystems EWSD im Beiheft der Zeitschrift "telcom report" von 1981 beschrieben, sowie in der USA-Patentschrift 4 564 725.

In den verbindungsindividuellen Schalteinrichtungen T treffen Informationen ein, die zu verarbeiten sind. Hierbei handelt es sich um sämtliche Schaltkennzeichen, die von Teilnehmerstellen aus abgegeben werden, von denen aus Teilnehmer Verbindungen herzustellen beabsichtigen. Entsprechendes gilt für verbindungsindividuelle Schalteinrichtungen, die nicht teilnehmerindividuell sind, zum Beispiel Verbindungssätze, Leitungsabschlußschaltungen und dergleichen. In der genannten DE-OS 34 16 074 sind darüber hinaus bereits detailliert Einzelheiten über die Aufgabe der Verarbeitung von eintreffenden Informationen beschrieben.

Sämtliche in den verbindungsindividuellen Schalteinrichtungen T eintreffenden Informationen sind durch das Schaltwerk P, das - wie beeits angedeutet - auch mehrfach vorgesehen sein kann, zu verarbeiten. Diese Informationen werden in an sich bekannter Weise mit Hilfe von Scan-Vorgängen laufend abgefragt und durch das Schaltwerk P · von den verbindungsindividuellen Schalteinrichtungen T abgerufen.

Wegen der Begrenztheit der Leistungsfähigkeit des Schaltwerkes P wird mit an sich bekannten Verkehrsmeßeinrichtungen At laufend die Informationsverarbeitungs-Verkehrsbelastung des Schaltwerkes P gemessen. Hierbei handelt es sich also um die Belastung des Schaltwerkes P mit Aufträgen zur Verarbeitung von in den verbindungsindividuellen Schalteinrichtungen T eintreffenden Informationen. Ein zentrales Schaltwerk P kann außerdem mit Informationsverarbeitungs-Aufträgen belastet werden, die anderen Ursprungs sind, zum Beispiel für Routineprüfungen innerhalb des Schaltwerks selbst, und dergleichen.

Die genannten und hier als bereits bekannt vorausgesetzten Verkehrsmeßeinrichtungen dienen also zur Ermittlung der Informationsverarbeitungs-Verkehrsbelastung des Schaltwerkes P. Dies dient zur Erkennung von durch Verarbeitungsanforderungen verursachten Informationsverarbeitungs-Verkehrsüberlastungen. Jede zu verarbeitende, in einer verbindungsindividuellen Schalteinrichtung T eingetroffene Information hat eine Verarbeitungsanforderung zur Folge, die sich an das Schaltwerk P richtet. Verursacht die Menge der insgesamt eintreffenden, zu verarbeitenden Informationen eine Informationsverarbeitungs-Verkehrsüberlastung beim Schaltwerk P, so werden Maßnahmen zur Abwehr solcher Überlastungen eingeleitet. Hierzu sind Anforderungsabweiseinrichtungen vorgesehen, die dafür sorgen, daß ein Zuviel an eintreffenden, zu verarbeitenden Informationen abgewiesen wird. Entsprechende im Aufbau befindliche Verbindungen werden demgemäß nicht vervollständigt; der betreffende wählende Teilnehmer erhält in an sich bekannter Weise ein Besetztsignal. Zweckmäßigerweise werden von den Abweisungsmaßnahmen hauptsächlich Neubelegungen betroffen, und zwar mit Vorrang vor Verarbeitungsanforderungen für Informationen, die zur Vervollständigung von bereits im Aufbau befindlichen Verbindungen eintreffen.

Die Anforderungsabweiseinrichtungen brauchen natürlich ihre Wirkung nur zu entfalten, wenn die Informationsverarbeitungs-Verkehrsbelastung des Schaltwerkes P zu groß wird. Je nach erreichten Informationsverarbeitungs-Verkehrsbelastung des Schaltwerkes P muß eine Anforderungsabweiseinrichtung mehr oder weniger der insgesamt eintreffenden Informationsverarbeitungs-Anforderungen abweisen. Der Grad der Belastung bzw. Überlastung des Schaltwerkes P ist maßgebend für einen jeweiligen Anteil von der Gesamtheit der Verarbeitungsanforderungen. Hierzu ist in einer Anforderungsabweiseinrichtung nach Maßgabe der jeweils ermittelten Informationsverarbeitungs-Verkehrsbelastung (At) ein kritischer Grenzwert einregelbar. Dieser ist maßgebend für den Anteil der insgesamt an das Schaltwerk P sich richtenden Verarbeitungsanforderungen, die abzuweisen sind.

Wie bereits in der genannten Offenlegungsschrift beschrieben ist, wird bei der Abweisung von Verarbeitungsanforderungen die Dringlichkeit der verschiedenen Verarbeitungsanforderungen berücksichtigt. Zweckmäßig ist es zum Beispiel bei der Verbindungsherstellung, Informationsverarbeitungsvorgänge für Verbindungsherstellungsvorgänge nach Maßgabe des jeweils bereits erzielten Fortschritts der jeweiligen Verbindungsherstellung zu bevorzugen und Abweisungen - soweit erforderlich - demgemäß vorzugsweise bei Verarbeitungsanforderungen vorzunehmen, die Informationsverarbeitungsvorgänge von Verbindungen betreffen, die bezüglich der Verbindungsherstellung erst am Anfang sind. Zweckmäßig kann es zum Beispiel auch sein, Verbindungsherstellungsvorgänge für abgehende Verbindungen gegenüber Verbindungsherstellungsvorgängen für ankommende Verbindungen zu bevorzugen, denn mit einer Abweisung einer Verarbeitungsanforderung geht alle für die betreffende Verbindungsherstellung bis dahin bereits geleistete Informationsverarbeitung, also geleistete Schaltwerksarbeit, verloren. Dementsprechend können Verarbeitungsanforderungen der verschiedenen Arten mit entsprechend unterschiedlichen Dringlichkeitsgraden ausgestattet sein. Demgemäß sind diesen verschieden dringlichen Verarbeitungsanforderungen unterschiedliche Dringlichkeitswerte individuell zugeordnet.

Die verschiedenen Dringlichkeitsgrade verschiedener Arten von Verarbeitungsanforderungen können aber auch ursächlich durch verschiedene Teilnehmerberechtigungen bedingt sein. Teilnehmerstellen können gegenüber einer normalen Verkehrsberechtigung im Ausnahmefall auch eine Sonderberechtigung haben, die ihnen bei der Verbindungsherstellung einen Vorrang gegenüber den Teilnehmerstellen mit Normalberechtigung verleihen. Demgegenüber kann es auch noch kathastrophenberechtigte Teilnehmerstellen geben, die wiederum gegenüber allen anderen Teilnehmerstellen bei der Verbindungsherstellung mit Vorrang bedient werden. In diesem Zusammenhang ergeben sich also die unterschiedlichen Dringlichkeitsgrade verschiedener Arten von Verarbeitungsanforderungen aus den verschiedenen Teilnehmerberechtigungen, die für die betreffenden Teilnehmer gespeichert sind.

Eine Anforderungsabweiseinrichtung arbeitet nun in der Weise, daß sie bei einer jeden Verarbeitungsanforderung einen Vergleich ihres Dringlichkeitswertes mit dem kritischen Grenzwert vornimmt. In der Zeichnung ist eine Anforderungsabweiseinrichtung K angedeutet. Verarbeitungsanforderungen werden ihr über den Weg k zugeführt. Für eine jede Verarbeitungsanforderung gibt die Anforderungsabweiseinrichtung K über den Weg L ein Annahmekennzeichen oder ein Abweisungskennzeichen an das Schaltwerk P ab, wodurch dieses jeweils veranlaßt wird, die betreffende Verarbeitungsanforderung anzunehmen oder abzuweisen, das heißt, die betreffende, zu verarbeitende Information aufzunehmen und in an sich bekannter Weise zu verarbeiten oder ein entsprechendes gegenteiliges Signal über den Weg t an die betreffende verbindungsindividuelle Schalteinrichtung T zu übertragen, wodurch hier signalisiert wird, daß der betreffende Verbindungsaufbau nicht fortgeführt werden kann. Dem rufenden Teilnehmer wird in an sich bekannter Weise ein entsprechendes Besetztsignal ausgesendet.

In der Zeichnung ist unter anderem eine Verkehrsmeßeinrichtung At angedeutet, mit deren Hilfe ein bereits einleitend erläuterter kritischer Grenzwert laufend ermittelt wird, der in einem Speicher b1 bis b8 der Anforderungsabweiseinrichtung aufgenommen wird. Diese Speicherung möge darin bestehen, daß eine der Speicherzeilen b1 bis b8 eine entsprechende Markierung erhält. Demgemäß möge jeweils einer von acht verschiedenen möglichen kritischen Grenzwerten speicherbar sein.

Der einer Verarbeitungsanforderung entsprechende jeweilige Dringlichkeitswert wird, wie weiter unten noch mehr im Detail beschrieben ist, einem Dringlichkeitswert-Zwischenspeicher D zugeführt, der ebenfalls acht Speicherzeilen d1 bis d8 enthält. Der jeweilige Dringlichkeitswert möge ebenfalls dadurch speicherbar sein, daß eine der Speicherzeilen des Dringlichkeitswert-Zwischenspeichers D entsprechend markiert wird.

Die Anforderungsabweiseinrichtung umfaßt ferner einen Vergleicher K, der nach Eintreffen einer jeden Verarbeitungsanforderung den ihr zugeordneten und im Dringlichkeitswert-Zwischenspeicher D zwischengespeicherten Dringlichkeitswert mit dem gespeicherten kritischen Genzwert vergleicht. Wenn der Dringlichkeitswert größer als der kritische Grenzwert ist, gibt der Vergleicher K ein Annahmekennzeichen zum Schaltwerk P hin ab. Ist der Dringlichkeitswert kleiner als der kritische Grenzwert, so bildet der Vergleicher K ein Zählkennzeichen. Wie ausgeführt wurde, besteht die Angabe des zu einer Verarbeitungseinheit jeweils gehörenden Dringlichkeitswertes in einer entsprechenden Markierung einer der Speicherzeilen b1 bis b8 des Dringlichkeitswert-Zwischenspeichers D, wobei also den acht verschiedenen möglichen Dringlichkeitswerten (gemäß acht verschiedenen Dringlichkeitsgraden von Verarbeitungsanforderungen zu eintreffenden Informationsverarbeitungsaufträgen) diese acht Speicherzeilen zugeordnet sind.

Wie ferner in der Zeichnung angedeutet ist, sind den Speicherzeilen d1 bis d8 Speicherglieder e1 bis e8 zugeordnet, die zur Speicherung von für jede der verschiedenen Arten von Verarbeitungsanforderungen festgelegten konstanten Restakzeptanzwerten vorgesehen sind. Durch diese pro Art von Verarbeitungsanforderung festgelegten Restakzeptanzwerte ist eine Obergrenze von pro Art abzuweisenden Verarbeitungsanforderungen festgelegt. Der Restakzeptanzwert gibt also pro Art von eintreffenden Verarbeitungsanforderungen den Anteil derjenigen der Verarbeitungsanforderungen dieser Art an, die abzuweisen sind, wenn und solange der kritische Grenzwert den jeweiligen artentsprechenden Dringlichkeitswert überschreitet, wenn also die Dringlichkeit von eintreffenden Verarbeitungsanforderungen verglichen mit dem kritischen Grenzwert nicht groß genug ist, um sämtliche Verarbeitungsanforderungen der betreffenden Art annehmen zu können.

Wenn z.B. die Verarbeitungsanforderung mit dem Dringlichkeitswert 3 bei einem kritischen Grenzwert von 4 oder höher unter die Abweisungsmaßnahmen fallen sollen und in dieser Betriebssituation ein Rest von 10 % der Verarbeitungsanforderungen mit dem Dringlichkeitswert 3 noch akzeptiert, d.h. angenommen werden soll, ist ein Restakzeptanzwert von 90 für diese Art von Verarbeitungsanforderungen in dem dieser Art zugeordneten Speicherglied e3 gespeichert. Entsprechendes gilt für die Verarbeitungsanforderungen der anderen Arten und der ihnen zugeordneten Speicherglieder e1 bis e8.

Darüber hinaus enthält jedes der Speicherglieder außerdem Speicherelemente zur Zählung von Restakzeptanzwerten pro Art von Verarbeitungsanforderung. Jedes Mal, wenn bei Eintreffen einer Verarbeitungsanforderung deren Dringlichkeitswert unter dem kritischen Grenzwert liegt, bildet der Vergleicher ein Zählkennzeichen. Dieses bewirkt, daß der für die betreffende Verarbeitungsanforderung im Speicherglied gespeicherte Restakzeptanzwert innerhalb desselben den zuvor genannten Speicherelementen dieses Speichergliedes, die einer Zählung der Restakzeptanzwerte dienen, zugeführt wird. Im Zusammenhang mit dem zuvor als Beispiel gegebenen Prozentwert von 10 % und dem Restakzeptanzwert von 90 sei angenommen, daß das Zählvolumen der Speicherelemente in jedem der Speicherglieder e1 bis e8 100 betrage. Werden nun nacheinander den Speicherelementen eines Speichergliedes (z.B e3) die Restakzeptanzwerte von jeweils 90 zugeführt, so findet bei neun auf diese Weise eintreffenden Zählkennzeichen nacheinander je ein Zählerüberlauf statt.

Die Zählung erfolgt also jeweils über einen Zählhöchstwert hinaus erneut bei dem Wert Null; die Zählung erfolgt also zyklisch. Bei dem begonnenen Zahlenbeispiel findet also nach 9 Überläufen beim zehnten eintreffenden Zählkennzeichen kein Überlauf statt. Immer, wenn ein Überlauf stattfindet, wird ein Abweisungskennzeichen gebildet und der betreffenden Verarbeitungsanforderung beigefügt; wenn dagegen - wie im zuvor beschriebenen zehnten Falle - kein Überlauf stattfindet, wird kein Abweisungskennzeichen gebildet. Im Gegensatz zu den 9 zuvor eingetroffenen Verarbeitungsanforderungen wird die zehnte Verarbeitungsanforderung angenommen.

Ergänzend sei zu dem zuvor gegebenen Zahlenbeispiel hinzugefügt, daß die der Zählung dienenden Speicherelemente der Speicherglieder $e1$ bis $e8$ auch so aufgebaut sein können, daß sich ein anderer Zählhöchstwert ergibt, z.B. ein Zählhöchstwert von 8. Soll der Anteil von mindestens anzunehmenden Verarbeitungsanforderungen 12,5 % betragen (also 1/8 von 100 %), so wäre ein Restakzeptanzwert von 7 zu speichern. Unter diesen zahlenmäßigen Voraussetzungen ergibt sich, daß dann, wenn die Verarbeitungsanforderungen einer bestimmten Art unter die Abweisungsmaßnahmen fallen, nur 7 von 8 Verarbeitungsanforderungen davon betroffen werden müssen, und daß danach jeweils eine Verarbeitungsanforderung anzunehmen ist.

Auf diese Weise wird für jede der verschiedenen Arten von Verarbeitungsanforderungen anhand eines artentsprechend gespeicherten Restakzeptanzwertes eine Zählung von Abweisungen durchgeführt, sofern und solange der kritische Grenzwert höher als der jeweils artentsprechende Dringlichkeitswert ist. Dadurch wird für jede Art von Verarbeitungsanforderungen der Anteil von mindestens zu akzeptierenden Verarbeitungsanforderungen gewährleistet, die bei Eintreffen der Abweisungsmaßnahmen für die betreffende Art von Verarbeitungsanforderungen wenigstens noch zu akzeptieren ist.

Es ist auch möglich, für alle Arten von Verarbeitungsanforderungen gemeinsam einen einheitlichen Restakzeptanzwert vorzusehen und zu speichern. Unter dieser Voraussetzung kann auch die Zählung der Zählkennzeichen gemeinsam für die verschiedenen Arten von Verarbeitungsanforderungen erfolgen.

Hauptsächlich hat die Erfindung Bedeutung für Annahme- und Abweisungsmaßnahmen für Verarbeitungsanforderungen, die durch Neubelegungen über Teilnehmerleitungen und Verbindungsleitungen unmittelbar verursacht sind.

Jeder Verarbeitungsanforderung wird also ein Annahmekennzeichen oder ein Abweisungskennzeichen zugeteilt, damit Verarbeitungsanforderungen mit einem niedrigen Dringlichkeitsgrad, zum Beispiel solche, die mit dem untersten Dringlichkeitsgrad eintreffen, trotzdem eine Chance haben, eine Verbindung herzustellen. Dieses Erfordernis ist durch die zuvor detailliert beschriebene Notrufmöglichkeit bedingt, die jederzeit gegeben sein muß. Einerseits soll also der beschriebene Vorrang in Phasen von Abweisungen von Verarbeitungsanforderungen gewährleistet sein. Andererseits sollen aber Verarbeitungsanforderungen, denen ein niedriger, zum Beispiel der niedrigste Dringlichkeitswert zugeordnet ist, nicht gänzlich abgewiesen werden können. Dabei ist es von Vorteil, die Erfolgs-Chance für Teilnehmer ohne besondere Berechtigungen so weit wie möglich vom Teilnehmerverhalten unabhängig zu machen. Dies wird mit Hilfe der hier beschriebenen Schaltungsanordnung erreicht.

Um die zuvor aufgeführten vermittlungstechnischen Vorgänge zu realisieren, ist in der beschriebenen Weise vorgesehen, daß in größerer Anzahl vorgesehene verbindungsindividuelle Schalteinrichtungen, von denen die Verarbeitungsanforderungen mit gleichem Dringlichkeitsgrad abgegeben werden, und denen mittels ihrer Adressen gleiche Dringlichkeitswerte zugeordnet sind, bei Abgabe jeweils einer Verarbeitungsanforderung zusätzlich durch einen ebenfalls aus der Adresse abgeleiteten Ordnungswert ergänzend markiert sind. Jede der verbindungsindividuellen Schalteinrichtungen ist mit Hilfe einer Adresse ansteuerbar. Bei Abgabe einer Verarbeitungsanforderung liegt im Schaltwerk P die betreffende Adresse vor. Diese Adresse wird unter anderem einem Adressenauswerter A zugeführt. Dieser leitet aus der jeweiligen Adresse den jeweiligen Dringlichkeitswert ab. Der Dringlichkeitswert kann außer durch die Adresse selber auch zusätzlich jeweils durch die Art der zu verarbeitenden Information bestimmt sein.

Es kann nun ferner davon ausgegangen werden, daß eine große Anzahl von Verarbeitungsanforderungen den gleichen Dringlichkeitswert aufweist. Bei Abgabe jeweils einer Verarbeitungsanforderung leitet der Adressenauswerter A aus der jeweiligen Adresse der verbindungsindividuellen Schalteinrichtung zusätzlich einen Ordnungswert ab. Dieser möge aus den beiden letzten Bit einer wesentlich umfangreicheren Adresseninformation bestehen.

Die Verarbeitungsanforderungen mit gleichem Dringlichkeitswert sind also zusätzlich durch diesen Ordnungswert ergänzend markiert, der mit Hilfe des Adressenauswerters A gewonnen wird. Diese Ordnungswerte sind teilweise voneinander verschieden. Sie sind auf die verschiedenen Verarbeitungsanforderungen gleichmäßig verteilt, wobei jeweils ein und derselbe Ordnungswert laufend wiederkehrt, was für jeden der verschiedenen Ordnungswerte zutrifft. Die den Verarbeitunganforderungen zugeordneten Dringlichkeitswerte sind also durch die sie ergänzenden Ordnungswerte variiert. Dadurch sind Verbindungsanforderungen mit ursprünglich gleicher Dringlichkeit in Dringlichkeitsgruppen mit pro Dringlichkeitswert unterschiedlichen Dringlichkeitsklassifizierungen verschiedenen Wertes aufgeteilt.

Im Dringlichkeitswert-Zwischenspeicher D wird - wie bereits beschrieben - für jede eintreffende Verarbeitungsanforderung vorübergehend der ihr zugeordnete Dringlichkeitswert gespeichert. Sofern die Dringlichkeitswerte von Verarbeitungsanforderungen durch die sie ergänzenden Ordnungswerte variiert sind, wird jeweils anstelle des Dringlichkeitswertes die durch Hinzunahme des Ordnungswertes sich ergebende Dringlichkeitsklassifizierung im Dringlichkeitswert-Zwischenspeicher D gespeichert.

Es ist nun noch zu beschreiben, wie die verschiedenen Dringlichkeitsklassifizierungen pro Dringlichkeitswert gewonnen werden. Wie bereits angegeben, wird mit Hilfe des Adressenauswerters A für bestimmte Verarbeitungsanforderungen ein den jeweiligen Dringlichkeitswert ergänzender Ordnungswert ermittelt. Dieser wird einer Verknüpfungsschaltung V zugeführt. Ferner ist ein Uhrzeitgeber U vorgesehen, in welchem in binärcodierter Form die momentane Uhrzeit gespeichert ist. Hierzu mögen Speicherzellen un bis u1 dienen. Jede dieser Speicherzellen möge zur Speicherung von je einem Bit der Uhrzeitinformation dienen. Es sei angenommen, daß die Speicherzellen u1 und u2 für die beiden letzten Stellenwerte der jeweiligen Uhrzeitinformation vorgesehen sind. Demnach wechselt die Information in der Speicherzelle u1 am häufigsten und in der Speicherzelle u2 am zweithäufigsten.

Die Verknüpfungsschaltung V verknüpft nun den Ordnungswert einer Verarbeitungsanforderung mit den in den beiden Speicherzellen u1 und u2 gespeicherten Teilen der Uhrzeitinformation. Diese Verknüpfung kann zum Beispiel in Form einer einfachen Undierung stattfinden. Durch die Verknüpfung mit der Uhrzeitinformation wird eine Zuordnung der mehreren Dringlichkeitsklassifizierungen pro Dringlichkeitswert zu den Ordnungswerten erzielt, die zeitabhängig zyklisch wechselt. Die Zuordnung der mehreren Dringlichkeitsklassifizierungen pro Dringlichkeitswert zu den Ordnungswerten wird also in gleichmäßigen Zeitabständen zyklisch vertauscht. Dadurch haben die verschiedenen Teilnehmer, von denen die Verarbeitungsanforderungen zunächst mit gleichem Dringlichkeitswert eingehen, Dringlichkeitsklassifizierungen, die in gleichmäßigen Zeitabständen zyklisch wechseln. Dadurch wird erreicht, daß die Erfolgs-Chance für Teilnehmer ohne besondere Berechtigung gleichmäßiger verteilt ist. Reihum haben diese Teilnehmer zu bestimmten Zeiten eine Erfolgs-Chance und zu anderen Zeiten nicht; zeitlich gesehen im Mittel aber haben diese Teilnehmer alle die gleiche Erfolgs-Chance. Bei grundsätzlich gleicher Berechtigung sind immer kurzzeitig einige dieser Teilnehmer gegenüber den übrigen bevorrechtigt. Diese Bevorrechtigung wechselt zyklisch unter diesen Teilnehmern. Dadurch haben in Phasen stärkerer Verkehrsbelastung und intensiverer Abweismaßnahmen diese Teilnehmer immer einmal vorübergehend eine Erfolgs-Chance zur Verbindungshestellung, insbesondere für Notrufe.

Die Abweiseinrichtungen verwenden also bei dem Vergleich mit ihrem kritischen Grenzwert die Dringlichkeitsklassifizierung, sofern eine solche zusätzlich zum gegebenen Dringlichkeitswert gewonnen wird. Die Dringlichkeitsklassifizierung wird in der beschriebenen Weise für Verarbeitungsanforderungen zusätzlich gewonnen, die einen relativ niedrigen Dringlichkeitsgrad haben, insbesondere denen der niedrigste Dringlichkeitswert zugeordnet ist.

Wie ausgeführt wurde, vergleicht der Vergleicher K den jeweiligen Dringlichkeitswert bzw. die jeweilige Dringlichkeitsklassifizierung mit dem kritischen Grenzwert. Es kann vorgesehen werden, daß die verschiedenen Dringlichkeitswerte und die verschiedenen Dringlichkeitsklassifizierungen immer ungleich sind mit dem jeweils eingeregelten kritischen Grenzwert. Dies kann dadurch bewerkstelligt werden, daß die kritischen Grenzwerte immer nur ungerade Zahlen sein können, während Dringlichkeitswerte und Dringlichkeitsklassifizierungen immer nur gerade Werte sein können. Für den Fall, daß der jeweilige Dringlichkeitswert bzw. die jeweilige Dringlichkeitsklassifizierung auch dem jeweils eingeregelten kritischen Grenzwert gleich sein kann, ist vorgesehen, daß bei Gleichheit ebenfalls ein Annahmekennzeichen der betreffenden Verarbeitungsanforderung zugeteilt wird. Im Gegensatz hierzu kann auch vorgesehen werden, daß in diesem Fall ein Abweisungskennzeichen der betreffenden Verarbeitungsanforderung zugeteilt wird.

## Patentansprüche

1. Schaltungsanordnung für Fernmeldevermittlungsanlagen, insbesondere Fernsprechvermittlungsanlagen, mit zentralen und/oder teilzentralen informationsverarbeitenden Schaltwerken (P) mit einer hinsichtlich der Informationsverarbeitungskapazität begrenzten Leistungsfähigkeit, und mit Verkehrsmeßeinrichtungen (At) zur Ermittlung der Informationsverarbeitungs-Verkehrsbelastung jeweils eines Schaltwerkes und zur Erkennung von durch Verarbeitungsanforderungen verursachten Informationsverarbeitungs-Verkehrsüberlastungen und mit einer Abwehr solcher Überlastungen dienenden Anforderungsabweiseinrichtungen (K), in denen nach Maßgabe der jeweils ermittelten Informationsverarbeitungs-Verkehrsbelastung ein kritischer Grenzwert (B) einregelbar ist, und in denen unterschiedlichen Dringlichkeitsgraden verschiedener Arten von Verarbeitungsanforderungen entsprechend diesen analog unterschiedliche Dringlichkeitswerte individuell zugeordnet sind (D), und die durch jeweils einen Vergleich des Dringlichkeitswertes einer jeden Verarbeitungsanforderung mit dem kritischen Grenzwert jener jeweils ein Annahmekennzeichen - bzw. Abweisungskennzeichen - zuteilt, wenn der Dringlichkeitswert größer - bzw. kleiner - als der kritische Grenzwert ist, und durch die eine jede der Verarbeitungsanforderungen für eingetroffene Informationen gemäß dem betreffenden zugeteilten Kennzeichen dem Schaltwerk zur Verarbeitung zugeführt wird - bzw. nicht zugeführt wird - , wodurch überdurchschnittlich dringliche Verarbeitungsanforderungen mit einem gewissen Vorrang gegenüber unterdurchschnittlich dringlichen Verarbeitungsanforderungen hinsichtlich ihrer Verarbeitung in dem Schaltwerk berücksichtigt werden,
**dadurch gekennzeichnet,**
daß die Schaltungsanordnung Mittel aufweist, die bewirken, daß nach Maßgabe eines in einer Anforderungsabweiseinrichtung (K) für jede der verschiedenen Arten von Verarbeitungsanforderungen gespeicherten konstanten artindividuellen Restakzeptanzwertes bei Überschreiten des kritischen Grenzwertes über den Dringlichkeitswert der jeweiligen Verarbeitungsanforderung der betreffenden Art in zyklischer Folge einer jeweils einem Zyklus entsprechenden Anzahl von mehreren artgleichen Verarbeitungsanforderungen mit Ausnahme von jeweils einer derselben je ein Abweisungskennzeichen und dieser einen Verarbeitungsanforderung ein Annahmekennzeichen zugeteilt wird.

2. Schaltungsanordnung nach Anspruch 1, **dadurch gekennzeichnet,** daß eine Anforderungsabweiseinrichtung (K) einer Verarbeitungsanforderung ein Annahmekennzeichen - bzw. Abweisungskennzeichen zuteilt, wenn der betreffende Dringlichkeitswert gleich oder größer - bzw. kleiner - als der kritische Grenzwert ist.

3. Schaltungsanordnung nach Anspruch 1, **dadurch gekennzeichnet,** daß eine Anforderungsabweiseinrichtung (K) einer Verarbeitungsanforderung ein Annahmekennzeichen - bzw. Abweisungskennzeichen - zuteilt, wenn der betreffende Dringlichkeitswert größer - bzw. gleich oder kleiner - als der kritische Grenzwert ist.

## Claims

1. Circuit arrangement for telecommunication exchanges, particularly for telephone exchanges, with common and/or intermediate-level control processors (P) with a capacity which is limited with respect to the information processing capacity, and with traffic-measuring devices (At) for determining the information-processing traffic loading of in each case one processor and for detecting information-processing traffic overloads caused by processing requests, and with request rejection devices (K) used for controlling such overloads, in which a critical limit value (B) can be adjusted as determined by the information-processing traffic loading determined in each case and in which, corresponding to different degrees of urgencies of various types of processing requests, urgency values which are analogously different are individually allocated to these (D), and which, by means of in each case a comparison of the urgency value of each processing request with the critical limit value, in each case allocates to the latter an acceptance code – or rejection code – when the urgency value is greater – or less – respectively than the critical limit value, and by means of which each of the processing requests for received information items is supplied – or not supplied – to the processor for processing in accordance with the relevant allocated code, as a result of which above-average urgent processing requests are taken into consideration with a certain priority compared with below-average urgent processing requests with respect to their processing in the processor, characterized in that the circuit arrangement exhibits means which have the effect that, as determined by a constant type-individual residual acceptance value stored for each of the various types of processing requests in a request rejection device (K), when the critical limit value is exceeded, a rejection code is allocated to each of a number, in each case corresponding to one cycle, of several processing requests of the same type with the exception of, in each case, one of these and an acceptance code as allocated to this one processing request, in cyclic sequence, by way of the urgency value of the respective processing request of the type concerned.

2. Circuit arrangement according to Claim 1, characterized in that a request rejection device (K) allocates to a processing request an acceptance code – or rejection code, if the relevant urgency value is equal to or greater than – or less than – the critical limit value.

3. Circuit arrangement according to Claim 1, characterized in that a request rejection device (K) allocates to a processing request an acceptance code – or rejection code – if the relevant urgency value is greater than – or equal to or less than – the critical limit value.

## Revendications

1. Montage pour centraux de télécommunications, notamment pour centraux téléphoniques, comportant des unités centrales et/ou partiellement centrales de commutation (11), qui traitent les informations et possèdent une capacité potentielle limitée de traitement des informations, et des dispositifs (At) de mesure du trafic servant à déterminer la charge en trafic de traitement d'informations d'une unité respective de commutation et à identifier des surcharges de trafic de traitement d'informations provoquées par des demandes de traitement, et des dispositifs (K) de rejet des demandes, qui sont utilisés pour lutter contre de telles surcharges et dans lesquels une valeur limite critique (B) peut être réglée en fonction de la charge respectivement déterminée en trafic de traitement d'informations, et dans lesquels à différents degrés de priorité de différents types de demandes de traitement sont associées individuellement (D) des valeurs de priorité, qui sont différentes d'une manière analogue auxdits degrés de priorité, et qui affectent respectivement un indicatif d'acceptation –ou un indicatif de rejet– au moyen respectivement d'une comparaison de la valeur de priorité de chaque demande de traitement à la valeur limite critique, lorsque la valeur de priorité est supérieure –ou inférieure– à la valeur limite critique, et à l'aide desquels chacune des demandes de traitement pour des informations arrivantes est envoyée –ou n'est pas envoyée– en fonction de l'indicatif affecté considéré, à l'unité de commutation en vue de son traitement, ce qui a pour effet que des demandes de traitement d'une urgence supérieure à la moyenne sont prises en compte avec une certaine priorité par rapport à des demandes de traitement possédant une priorité inférieure à la moyenne, pour leur traitement dans l'unité de commutation, caractérisé par le fait que le montage comporte des moyens agissant en sorte qu'en fonction d'une valeur d'acceptation résiduelle constante, mémorisée dans un dispositif (K) de rejet des demandes pour chacun des différents types de demandes de traitement et prévue individuellement pour chaque type, lorsque la valeur limite critique dépasse la valeur de priorité de la demande respective de traitement du type considéré, un indicatif de rejet est affecté selon une séquence cyclique à un nombre, qui correspond respectivement à un cycle, de plusieurs demandes de traitement de même type, à l'exception de l'une respective de ces demandes, et qu'un indicatif d'acceptation est affecté à cette demande de traitement.

2. Montage suivant la revendication 1, caractérisé par le fait qu'un dispositif (K) de rejet des demandes affecte à une demande de traitement un indicatif d'acceptation —ou un indicatif de rejet–, lorsque la valeur considérée de priorité est égale ou supérieure —ou inférieure– à la valeur limite critique.

3. Montage suivant la revendication 1, caractérisé par le fait qu'un dispositif (K) de rejet des demandes affecte à une demande de traitement un indicatif d'acceptation —ou un indicatif de rejet–, lorsque la valeur considérée de priorité est supérieure —ou égale ou inférieure– à la valeur limite critique.